# EUROPÄISCHE PATENTSCHRIFT

(11) **EP 1 317 820 B1**
(45) Veröffentlichungstag und Bekanntmachung des Hinweises auf die Patenterteilung: **13.12.2017**
(21) Anmeldenummer: 01967041.3
(22) Anmeldetag: 29.08.2001
(51) Int. Cl.: H04L 12/46, H04L 12/58, H04L 12/911, H04L 12/913, H04Q 11/04, H04L 12/927, H04L 12/851, H04L 12/70

(54) **VERFAHREN ZUM AUFBAU VON VERBINDUNGEN MIT VORGEGEBENER DIENSTGÜTE FÜR EIN PAKETORIENTIERTES KOMMUNIKATIONSNETZ MIT EINEM RESOURCENMANAGER**
METHOD FOR ESTABLISHMENT OF CONNECTIONS OF PRE-DETERMINED PERFORMANCE FOR A PACKET-ORIENTED COMMUNICATION NETWORK WITH A RESOURCE MANAGER
PROCEDE POUR ETABLIR DES LIAISONS AVEC DES QUALITES DE SERVICE PREDEFINIES DANS UN RESEAU DE COMMUNICATION ORIENTE PAQUET, A L'AIDE D'UN GESTIONNAIRE DE RESSOURCES

(30) Priorität: 13.09.2000 DE 10045205
(43) Veröffentlichungstag der Anmeldung: 11.06.2003
(73) Patentinhaber: Unify GmbH & Co. KG, 80807 München (DE)
(72) Erfinder: HIERHOLZER, Peter, 82407 Wielenbach (DE); MÜLLER, Harald, 82205 Gilching (DE); PREHOFER, Christian, 81477 München (DE); KLAGHOFER, Karl, 81373 München (DE)
(74) Vertreter: Fritzsche, Thomas
(86) Internationale Anmeldenummer: PCT/DE2001/003325
(87) Internationale Veröffentlichungsnummer: WO 2002/023828

(56) Entgegenhaltungen:
- EP-A- 0 967 756
- WO-A-00/08812
- WO-A-99/27686
- XIAO X: "Internet QOS: A Big Picture" , IEEE NETWORK, IEEE INC. NEW YORK, US, VOL. 13, NR. 2, PAGE(S) 8-18 XP002115238 ISSN: 0890-8044 Seite 12, rechte Spalte, Absatz 5 -Seite 13, rechte Spalte, Absatz 3
- PATENT ABSTRACTS OF JAPAN vol. 1999, no. 12, 29. Oktober 1999 (1999-10-29) & JP 11 191776 A (TOSHIBA CORP), 13. Juli 1999 (1999-07-13)

## Beschreibung

In vielen paketorientierten Kommunikationsnetzen, wie z.B. im Internet, wird für Verbindungen zwischen Endgeräten dieser Kommunikationsnetze keine Dienstgüte garantiert, wenn keine zusätzlichen Vorkehrungen getroffen werden. Die Dienstgüte einer Verbindung wird häufig auch als "Quality of Service" (QoS) bezeichnet und kann unterschiedliche Übertragungs- und Verbindungsresourcen, wie z.B. die Übertragungsbandbreite, die Übertragungsgeschwindigkeit, die zulässige Fehlerrate und/oder die Übertragungsdauer umfassen.

Bei zeitgemäßen Kommunikationssystemen, die häufig auf solchen paketorientierten Kommunikationsnetzen basieren, sind zur Sicherung einer vorgegebenen Dienstgüte sogenannte Resourcenmanager vorgesehen. Diese sind jeweils einem Kommunikationsnetz oder einem Teilnetz zugeordnet und verwalten dessen jeweilige Übertragungsresourcen. Bei einem Resourcenmanager können für aufzubauende Verbindungen jeweils vorgebbare Übertragungsresourcen verbindungsspezifisch reserviert werden. Nach einer erfolgreichen Reservierung von Übertragungsresourcen überwacht der Resourcenmanager die permanente Verfügbarkeit der reservierten Übertragungsresourcen für die jeweilige Verbindung.

Üblicherweise werden einem Resourcenmanager zum Reservieren von Übertragungsresourcen für eine aufzubauende Verbindung deren Ursprung und Ziel übermittelt. Der Resourcenmanager stellt dann anhand der übermittelten Ursprungs- und Zielinformationen fest, über welchen Leitweg die aufzubauende Verbindung verlaufen wird. Hierzu benötigt der Resourcenmanager gemäß dem bekannten Stand der Technik genaue Informationen über die gesamte Topologie des Kommunikationsnetzes. Diese Informationen werden dem Resourcenmanager auf sehr aufwendige Weise mit Hilfe eines Routingprotokolls übermittelt. Ein derartiges Verfahren ist beispielsweise in dem Dokument "Performance of QoS Agents for Provisioning Network Resources" von Schelen et al. in den Proceedings of IFIP Seventh International Workshop on Quality of Service (IWQoS'99), London, Juni 1999 beschrieben.

WO 99/27686 A1 offenbart ein Verfahren zur Zulassungssteuerung zu einem öffentlichen verbindungslosen Paketnetzwerk, die einem Benutzer eine Dienstqualität garantiert, die besser als ein "best effort"-Dienst ist, wozu für jede Übertragung durch einen Benutzer über das Netzwerk eine Ticket-Nachricht von dem Netzwerk an den Benutzer gesendet wird, die als verfügbare Ressourcen für zukünftige Sendeanforderungen verwendet wird.

In WO 00/08812 A1 wird weiterhin ein Verfahren zur Zuordnung von Netzwerkressourcen für von einem Zugangsnetzwerk über ein Edge-Device, ein Kommunikationsnetz und ein anderes Edge-Device in ein Zugangsnetzwerk führende Verbindungen offenbart.

In vielen Fällen sind Verbindungen zwischen unterschiedlichen Teilnetzen eines Kommunikationssystems aufzubauen, wobei die Teilnetze zwar selbst über eine sehr hohe Übertragungsbandbreite verfügen, jedoch durch eine Übertragungsstrecke mit verhältnismäßig geringer Übertragungsbandbreite gekoppelt sind. Ein typisches Beispiel hierfür sind sogenannte Lokale Netze (LAN: Local Area Network), die über ein öffentliches Telefonnetz gekoppelt sind. Das Telefonnetz mit seiner verhältnismäßig geringen Übertragungsbandbreite stellt in diesem Fall einen Engpass für zwischen den Lokalen Netzen auszutauschende Daten dar. Dies führt zu dem Problem, Übertragungsresourcen auch für über solche Engpässe verlaufende Verbindungen effizient zu kontrollieren.

Es ist Aufgabe der vorliegenden Erfindung ein Verfahren für ein paketorientiertes Kommunikationsnetz zum Aufbau von Verbindungen mit vorgegebener Dienstgüte anzugeben, das mit geringem Aufwand eine wirksame Kontrolle von Übertragungsresourcen für über einzelne Übertragungsstrecken, insbesondere einzelne Übertragungsengpässe verlaufende Verbindungen erlaubt.

Gelöst wird diese Aufgabe durch ein Verfahren mit den Merkmalen des Patentanspruchs 1.

Im Rahmen des erfindungsgemäßen Verfahrens wird ein übertragungstechnischer Resourcenumfang einer Übertragungsstrecke von einem Resourcenmanager verwaltet.

Diesem Resourcenmanager wird von einer Netzübergangseinrichtung, die Datenpakete über die Übertragungsstrecke überträgt, eine Ursprung und Ziel der Datenpakete identifizierende Datenpaket-Adressinformation übermittelt. Der Resourcenmanager verfügt damit über die Information, dass Datenpakete mit dem betreffenden Ursprung und Ziel über die betreffende Übertragungsstrecke übertragen werden. Bei einer nachfolgenden Resourcenanforderung für eine aufzubauende Verbindung, deren Ursprung und Ziel mit dem Ursprung und Ziel der vorher übertragenen Datenpakete übereinstimmt, kann der Resourcenmanager dann davon ausgehen, dass die aufzubauende Verbindung - zumindest mit sehr hoher Wahrscheinlichkeit - ebenfalls über die betreffende Übertragungsstrecke geführt wird. Dementsprechend erfolgt der weitere Verbindungsaufbau abhängig vom verfügbaren Recourcenumfang dieser Übertragungsstrecke.

Ein Vorteil dieses Verfahrens besteht darin, dass mit der Datenpaket-Adressinformation jeweils eine aktuelle Information über den Leitweg von Datenpaketen bzw. Verbindungen zum Resourcenmanager übermittelt wird, dessen Informationsbasis über die Verbindungsführung im Kommunikationsnetz somit automatisch aktualisiert wird. Dies ist insbesondere in solchen Kommunikationsnetzen sehr vorteilhaft, in denen sich eine Leitweg- oder Verbindungsführung zwischen vorgegebenen Endpunkten häufig ändert.

Im Zusammenhang mit dem erfindungsgemäßen Verfahren seien unter einer Verbindung auch sogenannte virtuelle Verbindungen, Verbindungsbündel, Verbindungspfade oder allgemein Datenströme mit jeweils definiertem Ursprung und Ziel verstanden. In diesem Sinne können als Ursprung und Ziel derartiger Verbindungen beispielsweise Endgeräte, Netzknoten, Vermittlungseinrichtungen, Kommunikationsnetze, Teilnetze oder Subnetze aufgefaßt werden.

Die vom Resourcenmanager verwaltete Dienstgüte einer Verbindung kann ganz unterschiedliche Übertragungsresourcen, wie z.B. Übertragungsbandbreite, Übertragungsgeschwindigkeit, zulässige Fehlerrate, Übertragungsverzögerung und/oder beliebige andere sogenannte Quality-of-Service-Parameter, gegebenenfalls dienst- und/oder prioritätsklassenspezifisch betreffen.

Vorteilhafte Ausführungsformen und Weiterbildungen der Erfindung sind in den abhängigen Ansprüchen angegeben.

Mit der Datenpaket-Adressinformation kann vorteilhafterweise eine Linkinformation zum Resourcenmanager übertragen werden, die es erlaubt die betreffende Übertragungsstrecke zu identifizieren. Die Linkinformation kann beispielsweise aus einer die Netzübergangseinrichtung identifizierenden Information und gegebenenfalls einer eine von mehreren daran angeschlossenen Übertragungsstrecken identifizierenden Information bestehen. Durch die Übermittlung der Linkinformation wird der Resourcenmanager in die Lage versetzt, auch mehrere jeweils anhand der Linkinformation identifizierbare Übertragungsstrecken separat mittels des erfindungsgemäßen Verfahrens zu verwalten.

Nach einer vorteilhaften Weiterbildung der Erfindung kann die Netzübergangseinrichtung - gegebenenfalls in regelmäßigen Zeitabständen - eine Resourceninformation über den verfügbaren Resourcenumfang der Übertragungsstrecke zum Resourcenmanager übermitteln. Auf diese Weise kann der vom Resourcenmanager verwaltete Resourcenumfang anhand der aktuell vorliegenden Übertragungssituation aktualisiert werden. Dies ist insbesondere vorteilhaft, um unvorhergesehene Beeinträchtigungen des Übertragungsverhaltens der Übertragungsstrecke dem Resourcenmanager direkt und ohne Umweg über ein aufwendiges Routingprotokoll zu signalisieren.

Weiterhin können zur Verringerung des vom Netzübergangsknoten zum Resourcenmanager zu übertragenden Datenumfangs unterschiedliche Maßnahmen vorgesehen sein:
So kann vor Übertragung einer Datenpaket-Adressinformation erst geprüft werden, ob eine inhaltsgleiche Datenpaket-Adressinformation bereits früher gesendet wurde. Dabei findet die Übertragung nur dann statt, falls die Prüfung negativ ausfällt. Um die Prüfung durchführen zu können, sind bisher gesendete Datenpaket-Adressinformationen durch die Netzübergangseinrichtung zu speichern.

Ferner kann die Netzübergangseinrichtung abhängig von der Datenpaket-Adressinformation eine Routinginformation zum Erkennen von über die Übertragungsstrecke verlaufenden Verbindungen zum Resourcenmanager übermitteln. Eine solche Routinginformation kann beispielsweise durch Zugriff auf eine Routingtabelle ermittelt werden. Eine Routinginformation kann hierbei z.B. besagen, dass alle Datenpakete mit einer in der Routinginformation angegebenen Ursprungs- und/oder Ziel-Subnetzadresse über die Übertragungsstrecke übertragen werden.

Weiterhin kann die Übertragung der Datenpaket-Adressinformation eines Datenpaketes abhängig von einer in diesem Datenpaket enthaltenen Übermittlungsinformation erfolgen. Auf diese Weise können z.B. Datenpakete, die zwischen nicht verbindungsfähigen Endgeräten oder Applikationen des Kommunikationsnetzes ausgetauscht werden, von der Verwendung für das erfindungsgemäße Verfahren ausgeschlossen werden. Derartige Datenpakete können durch den Netzübergangsknoten anhand einer in den Datenpaketen enthaltenen Übermittlungsinformation, wie z.B. einer Ursprungs- und/oder Zieladresse oder gegebenenfalls einer Protokoll- und/oder Portnummer erkannt werden.

Ein Ausführungsbeispiel der Erfindung wird nachfolgend anhand der Zeichnung näher erläutert.

Dabei zeigen jeweils in schematischer Darstellung:
Fig 1 ein Kommunikationssystem mit zwei über eine Übertragungsstrecke gekoppelten Teilnetzen beim Übertragen von Datenpaketen und
Fig 2 dasselbe Kommunikationssystem beim Aufbau einer Verbindung.

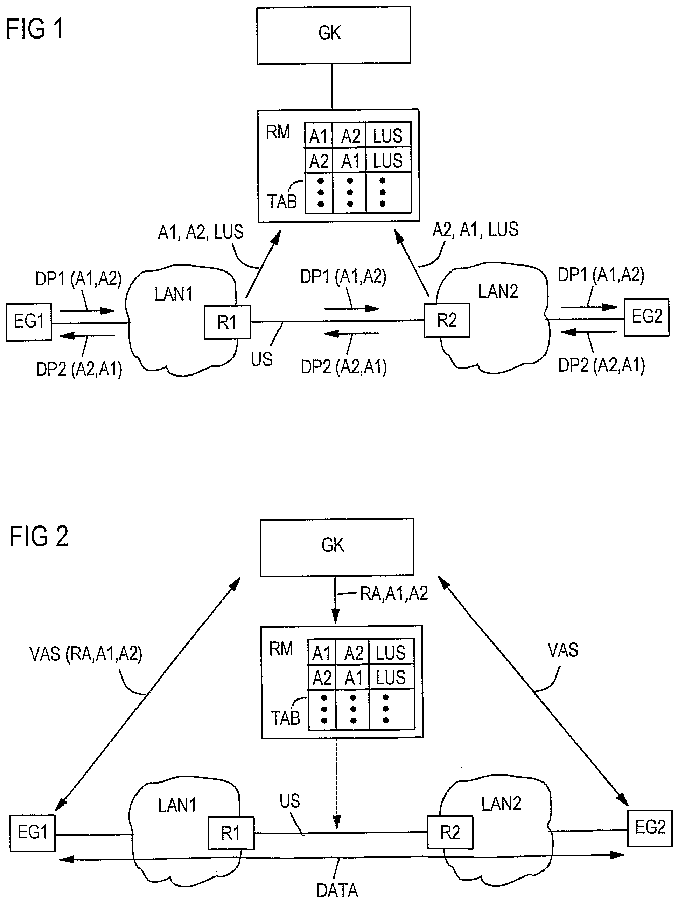

In Fig 1 und Fig 2 ist jeweils dasselbe Kommunikationssystem mit zwei paketorientierten, vorzugsweise internetprotokollbasierten Kommunikationsteilnetzen LAN1 und LAN2, die im vorliegenden Ausführungsbeispiel als sogenannte Lokale Netze (LAN: Local Area Network) realisiert sind, schematisch dargestellt. Das Lokale Netz LAN1 verfügt über eine Routereinrichtung R1, die über eine Übertragungsstrecke US mit einer Routereinrichtung R2 des Lokalen Netzes LAN2 verbunden ist. Für das Ausführungsbeispiel sei angenommen, das die Übertragungsstrecke US wesentlich geringere Übertragungsresourcen aufweist als die Lokalen Netze LAN1 und LAN2 und mithin einen Übertragungsengpass für einen Datenaustausch zwischen den Lokalen Netzen LAN1 und LAN2 darstellt. Eine derartige Situation tritt in der Praxis häufig auf, wenn z.B. mehrere an unterschiedlichen Standorten befindliche Lokale Netze einer Firma über das öffentliche Kommunikationsnetz oder das Internet gekoppelt sind. Auf diese Weise gekoppelte Lokale Netze werden häufig auch als "Virtual Private Networks" (VPN) bezeichnet.

Anstelle der Routereinrichtungen R1 und R2, die hier als sogenannte Edge-Router realisiert sind, können zur Kopplung der Lokalen Netze LAN1 und LAN2 auch sogenannte Gateways, Vermittlungseinrichtungen, Modems oder allgemein Netz- oder Netzübergangsknoten eines privaten oder öffentlichen Kommunikationsnetzes vorgesehen sein.

Zur Verwaltung von Übertragungsresourcen der Lokalen Netze LAN1 und LAN2 und insbesondere der Übertragungsstrecke US ist ein zentraler Resourcenmanager RM in Kommunikationssystem angeordnet. Der Resourcenmanager RM ist im Kommunikationssystem für die Reservierung von Übertragungsresourcen für aufzubauende Verbindungen sowie für die Sicherstellung der Dienstgüte von aufgebauten Verbindungen zuständig. Die Übertragungsresourcen bzw. die Dienstgüte können dabei ganz unterschiedliche Übertragungsparameter betreffen, wie z.B. eine maximale oder mittlere Übertragungsbandbreite, Übertragungsverzögerung und/oder Übertragungsfehlerrate. Für alle Verbindungen, die eine Dienstgütegarantie im Kommunikationssystem benötigen, müssen die entsprechenden Übertragungsresourcen beim Resourcenmanager RM angefordert und nach Abbau der Verbindung wieder freigegeben werden.

Weiterhin ist an das Lokale Netz LAN1 ein Endgerät EG1 und an das Lokale Netz LAN2 ein Endgerät EG2 angekoppelt. Die Endgeräte EG1 und EG2 können dabei als beliebige Kommunikationsendgeräte, z.B. zur Sprach-, Video- und/oder Datenkommunikation, oder auch als Personalcomputer ausgebildet sein. Dem Endgerät EG1 ist eine Adressinformation A1 und dem Endgerät EG2 eine Adressinformation A2 zugeordnet. Über die Adressinformationen A1 und A2 können die Endgeräte EG1 bzw. EG2 im Kommunikationssystem eindeutig adressiert und identifiziert werden. In einer alternativen Ausführungsform der Erfindung können anstelle mindestens eines der Endgeräte EG1 und EG2 beispielsweise auch jeweils eine weitere Routereinrichtung, Vermittlungseinrichtung oder ein weiterer Netzknoten des Kommunikationssystems vorgesehen sein.

Ferner weist das Kommunikationssystem einen zentralen, sogenannten Gatekeeper GK auf, der an den Resourcenmanager RM angekoppelt ist. Der Gatekeeper GK ist für eine logische Steuerung, d.h. für Aufbau und Abbau sowie Überwachung, von Verbindungen im Kommunikationssystem zuständig. Zum Aufbau einer Verbindung mit garantierter Dienstgüte sind dem Gatekeeper GK Ursprung und Ziel der aufzubauenden Verbindung sowie eine Resourcenanforderung zu übermitteln. Im vorliegenden Ausführungsbeispiel genügt der Gatekeeper GK dem ITU-T-Standard H.323.

Gemäß einer weiteren Ausführungsform kann anstelle des Gatekeepers GK auch ein das sogenannte SIP-Protokoll (SIP: Session Initiation Protocol) nach IETF-Standard unterstützender SIP-Server eingesetzt sein.

Der Resourcenmanager RM weist weiterhin eine Zuordnungstabelle TAB auf, worin Ursprungs- und Zieladressen von Datentransfers im Kommunikationssystem einzelnen Übertragungsstrecken zugeordnet werden.

Fig 1 zeigt das Kommunikationssystem beim Übertragen von Datenpaketen DP1 und DP2 über die Übertragungsstrecke US. Die Datenpakete DP1 werden im vorliegenden Ausführungsbeispiel vom Endgerät EG1 im Rahmen eines nicht näher bestimmten Datentransfers mit der Adressinformation A1 als Ursprungsadresse und der das Endgerät EG2 identifizierenden Adressinformation A2 als Zieladresse in das Lokale Netz LAN1 übertragen. Die Routereinrichtung R1 des lokalen Netzes LAN1 erkennt anhand der Zieladresse A2, dass das Zielendgerät EG2 über das Lokale Netz LAN2 erreichbar ist und übermittelt die Datenpakete DP1 infolgedessen über die Übertragungsstrecke US und die Routereinrichtung R2 ins Lokale Netz LAN2. Dieses leitet die Datenpakete DP1 dann an das Zielendgerät EG2 weiter. Analog dazu werden vom Endgerät EG2 im Rahmen eines weiteren nicht näher bestimmten Datentransfers die Datenpakete DP2 mit der Adressinformation A2 als Ursprungsadresse und der das Endgerät EG1 identifizierenden Adressinformation A1 als Zieladresse in das Lokale Netz LAN2 und von diesem über das Lokale Netz LAN1 zum Zielendgerät EG1 übermittelt.

Im vorliegenden Ausführungsbeispiel wird sowohl der Datentransfer vom Endgerät EG1 zum Endgerät EG2 als auch der Datentransfer in umgekehrter Richtung über die Übertragungsstrecke US geführt. Im Allgemeinen kann der Leitweg von Datentransfers jedoch auch abhängig von der Übertragungsrichtung sein. Weiterhin können sich die Übertragungsresourcen der Übertragungsstrecke US für die beiden Übertragungsrichtungen unterscheiden und werden dementsprechend vom Resourcenmanager RM im Allgemeinen separat verwaltet.

Erfindungsgemäß übermittelt die Routereinrichtung R1 die in den zu übertragenden Datenpaketen DP1 enthaltene Ursprungsadresse, hier A1, und Zieladresse, hier A2, zusammen mit einer die Übertragungsstrecke US identifizierenden Linkinformationen LUS zum Resourcenmanager RM. Der Resourcenmanager speichert daraufhin die Adressinformation A1 als Ursprungsadresse, die Adressinformation A2 als Zieladresse sowie die Link-Information LUS, einander zugeordnet, in der Zuordnungstabelle TAB. Analog dazu übermittelt die Routereinrichtung R2 die in den zu übertragenden Datenpaketen DP2 enthaltene Ursprungsadresse, hier A2, und Zieladresse, hier A1, zusammen mit einer die Übertragungsstrecke US identifizierenden Link-Information LUS zum Resourcenmanager RM. Dieser speichert die Adressinformation A2 als Ursprungsadresse, die Adressinformation A1 als Zieladresse sowie die Link-Information LUS, einander zugeordnet, in der Zuordnungstabelle TAB. Damit kann der Resourcenmanager RM durch Zugriff auf die Zuordnungstabelle TAB feststellen, dass sowohl ein Datentransfer vom Endgerät EG1 zum Endgerät EG2 als auch ein Datentransfer in umgekehrter Richtung jeweils über die Übertragungsstrecke US geführt werden. Das Auslesen und Übermitteln der in den Datenpaketen DP1 bzw. DP2 enthaltenen Adressinformationen A1 bzw. A2 kann von den Routereinrichtungen R1 und R2 vorzugsweise mit Hilfe einer zusätzlich zu implementierenden, sogenannten Monitoring-Komponente zur Beobachtung des Datenpaketverkehrs durchgeführt werden. Die Informationsübermittlung von den Routereinrichtungen R1 und R2 zum Resourcenmanager RM erfolgt vorzugsweise über logische Signalisierungskanäle.

Vorzugsweise übermitteln die Routereinrichtungen R1 und R2 immer nur dann Adressinformationen und Linkinformationen an den Resourcenmanager RM, wenn sich diese Informationen ändern. Zu diesem Zweck werden von den Routereinrichtungen R1 und R2 zum Resourcenmanager RM zu übertragende Adressinformationen gespeichert, und mit in nachfolgenden Datenpaketen enthaltenen, aktuellen Adressinformationen verglichen. Die aktuellen Adressinformationen werden nur dann zum Resourcenmanager RM übertragen, wenn sie mit den gespeicherten Adressinformationen nicht übereinstimmen. Auf diese Weise wird vermieden, dass für jedes einzelne der Datenpakete DP1 bzw. DP2 identische Adress- und Linkinformationen wiederholt zum Resourcenmanager RM übermittelt werden.

Der Umfang der von den Routereinrichtungen R1, R2 zum Resourcenmanager RM zu übertragenden Informationen kann auch dadurch verringert werden, dass verallgemeinerte Routing- oder Adressinformationen, z.B. in Form von Subnetzadressen, zum Resourcenmanager übermittelt werden. Häufig können die Routereinrichtungen R1 und R2 anhand eines über die Übertragungsstrecke US zu übermittelnden Datenpaketes erkennen, dass noch weiterer Datenverkehr über die Übertragungsstrecke US geführt wird. So kann z.B. die Routereinrichtung R1 durch Zugriff auf eine Routingtabelle, die besagt, dass alle an das Lokale Netz LAN2 gerichteten Datenpakete über die Übertragungsstrecke US zu übermitteln sind, anhand eines vom Endgerät EG1 eintreffenden Datenpakets feststellen, dass alle Datenpakete vom Endgerät EG1, die unabhängig vom Zielendgerät ins Lokale Netz LAN2 zu vermitteln sind, über die Übertragungsstrecke US geführt werden. In diesem Fall kann die Routereinrichtung R1 die Adressinformation A1 als Ursprungsadresse und die Subnetzadresse des Lokalen Netzes LAN2 als Zieladresse an den Resourcenmanager RM übertragen.

In Fig 2 ist das Kommunikationssystem beim Aufbau einer Verbindung vom Endgerät EG1 zum Endgerät EG2 schematisch dargestellt. Die aufzubauende Verbindung ist dabei unabhängig von den vorhergehenden Datentransfers zwischen den Endgeräten EG1 und EG2. Eine derartige Situation tritt beispielsweise häufig auf, wenn die Endgeräte EG1 und EG2 als Personalcomputer realisiert sind, zwischen denen sowohl ein reger Dateienaustausch ohne Dienstgütegarantie stattfindet als auch Verbindungen zur Sprachübertragung per Internetprotokoll (VoIP: Voice over Internet Protocol) mit garantierter Dienstgüte aufgebaut werden.

Im Rahmen des Verbindungsaufbaus wird eine Verbindungsaufbau-Signalisierung VAS zwischen dem Endgerät EG1 und dem Gatekeeper GK sowie zwischen dem Gatekeeper GK und dem Endgerät EG2 durchgeführt. Zu diesem Zweck werden logische Signalisierungskanäle zwischen dem Endgerät EG1 und dem Gatekeeper GK sowie zwischen dem Gatekeeper GK und dem Endgerät EG2 eingerichtet. Die logischen Signalisierungskanäle zur Verbindungsaufbau-Signalisierung sind in Fig 2 mittels durchgezogener Doppelpfeile veranschaulicht. Die Verbindungsaufbau-Signalisierung erfolgt vorzugsweise gemäß der ITU-T-Empfehlung H.323v2. Diese Art der Verbindungsaufbau-Signalisierung wird häufig auch als "fast connect" bezeichnet.

Im Rahmen der Verbindungsaufbau-Signalisierung VAS werden von dem die Verbindung initiierenden Endgerät EG1 die den Verbindungsursprung EG1 identifizierende Adressinformation A1, die das Verbindungsziel EG2 identifizierende Adressinformation A2 sowie eine Resourcenanforderung RA zum Gatekeeper GK übermittelt. Dieser überträgt die Resourcenanforderung RA sowie die Adressinformationen A1 und A2 zum Resourcenmanager RM und leitet daraufhin die Verbindung zwischen den Endgeräten EG1 und EG2 ein.

Nach einer alternativen Ausführungsform des Verbindungsaufbaus kann vom Endgerät EG1 eine das Verbindungsziel EG2 identifizierende, logische Zieladresse (nicht dargestellt), wie z.B. eine Aliasadresse, Email-Adresse, URL (Uniform Resource Locator) oder E.164-Adresse, zum Gatekeeper GK übermittelt werden. Die logische Zieladresse wird dann durch den Gatekeeper GK in eine das Verbindungsziel EG2 identifizierende Transportadresse, hier A2, umgesetzt und als solche zum Resourcenmanager RM übertragen. Als Transportadresse wird in diesem Zusammenhang eine Adressinformation bezeichnet, anhand der die Datenpakete durch das Kommunikationssystem gelenkt werden können. Eine solche Transportadresse kann beispielsweise durch eine IP-Adresse (IP: Internet Protocol) und eine Portnummer gebildet sein.

Mit der Übermittlung der Adressinformationen A1 und A2 ist dem Resourcenmanager RM Ursprung und Ziel der aufzubauenden Verbindung, aber noch nicht deren Leitweg bekannt.

Um Informationen über den Leitweg der aufzubauenden Verbindung zu erhalten, sucht der Resourcenmanager RM in der Zuordnungstabelle TAB einen Eintrag, dessen Ursprungsadresse mit der vom Gatekeeper GK übermittelten Adressinformation A1 und dessen Zieladresse mit der vom Gatekeeper GK übermittelten Adressinformation A2 übereinstimmt. Falls in der Zuordnungstabelle TAB eine Subnetzadresse als Ursprungs- oder Zieladresse enthalten ist, wird auch eine Übereinstimmung dieser Subnetzadresse mit dem entsprechenden Subnetz-Adressteil der betreffenden vom Gatekeeper GK übermittelten Adressinformation A1 bzw. A2 als Übereinstimmung im Sinne des erfindungsgemäßen Verfahrens gewertet.

Im vorliegenden Ausführungsbeispiel wird bereits der erste Tabelleneintrag als übereinstimmend befunden und die Linkinformation LUS dieses Eintrags ausgelesen. Anhand der ausgelesenen Linkinformation LUS wird durch den Resourcenmanager RM erkannt, dass die aufzubauende Verbindung über die durch die Linkinformation LUS identifizierte Übertragungsstrecke US geführt wird. Dies veranlaßt den Resourcenmanager RM beim Bereitstellen von Übertragungsresourcen gemäß der Resourcenanforderung RA insbesondere die aktuell verfügbaren Übertragungsresourcen der identifizierten Übertragungsstrecke US zu berücksichtigen.

Sofern die angeforderten Übertragungsresourcen bei der Übertragungsstrecke US aktuell nicht verfügbar sind, wird der Verbindungsaufbau abgebrochen. Für den Fall, dass in der Zuordnungstabelle TAB kein im vorstehenden Sinne übereinstimmender Eintrag gefunden wird, kann der Verbindungsaufbau vorzugsweise fortgesetzt werden, obwohl dem Resourcenmanager RM nicht bekannt ist, dass die Verbindung über die Übertragungsstrecke US geführt wird. Diese Verfahrensweise kann in einzelnen Fällen dazu führen, dass eine Garantie für die angeforderten Übertragungsresourcen nach Aufbau der Verbindung nicht mehr eingehalten werden kann. Derartige Fälle sind jedoch sehr selten, da sie im Wesentlichen nur während einer kurzen Startphase des Kommunikationssystems auftreten können, in der die Endgeräte EG1 und EG2 noch kein Datenpaket ausgetauscht haben. Um solche Fälle dennoch zu vermeiden, können vom Resourcenmanager RM Resourcenreserven vorgehalten werden.

Nach Aufbau der Verbindung können Nutzdaten DATA zwischen den Endgeräten EG1 und EG2 über die Lokalen Netze LAN1 und LAN2 und die Übertragungsstrecke US mit garantierter Dienstgüte ausgetauscht werden.

Wie vorstehend bereits erwähnt, sind die verfügbaren Übertragungsresourcen der Übertragungsstrecke US wesentlich geringer als die Übertragungsresourcen der Lokalen Netze LAN1 und LAN2. Aus diesem Grund sind für die Kontrolle der Übertragungsresourcen für die Verbindung hauptsächlich die auf der Übertragungsstrecke US verfügbaren Übertragungsresourcen maßgeblich. Die besondere Kontrolle der Übertragungsresourcen der Übertragungsstrecke US durch den Resourcenmanager RM ist in Fig 2 durch einen strichlierten Pfeil angedeutet.

Die Übertragungsresourcen der Übertragungsstrecke US können gegebenenfalls dienstklassenspezifisch, prioritätsklassenspezifisch und/oder übertragungsrichtungsspezifisch verwaltet und kontrolliert werden. Eine einfache Implementierung einer solchen Resourcenverwaltung besteht darin, den Datenverkehr in unterschiedliche Dienst- und/oder Prioritätsklassen einzuteilen und jeder dieser Klassen einen Anteil der verfügbaren Übertragungsresourcen der Übertragungsstrecke US - gegebenenfalls übertragungsrichtungsspezifisch - zuzuordnen. Derartige Datenverkehrsklassen werden häufig auch als DiffServ-Klassen bezeichnet. Vorzugsweise kann auch eine Datenverkehrsklasse für verbindungslosen, d.h. unangemeldeten Datenverkehr vorgesehen sein. Der zu dieser Verkehrsklasse gehörige Datenverkehr erhält dann keine Dienstgütegarantie. Zur Verwaltung der Verkehrsklassen kann im Resourcenmanager RM eine Resourcentabelle (nicht dargestellt) vorgesehen sein, in der für einzelne Verkehrsklassen jeweils die für Verbindungen reservierten sowie die noch verbleibenden Übertragungsresourcen eingetragen sind.

Um zu übertragende Datenpakete einzelnen Verkehrsklassen mit garantierter Dienstgüte zuordnen zu können, können diese

Datenpakete mit einer Verkehrsklasseninformation markiert werden. Anhand dieser Markierung, können die

Routereinrichtungen R1 und R2 erkennen, welcher Verkehrsklasse ein zu übertragendes Datenpaket zugeordnet ist und welche Übertragungsresourcen gegebenenfalls für dieses Datenpaket reserviert sind.

Weiterhin kann vorgesehen sein, dass der Resourcenmanager RM jede erfolgreiche, die Übertragungsstrecke US betreffende Resourcenreservierung zur Routereinrichtung R1 bzw. R2 signalisiert. Die Routereinrichtung R1 bzw. R2 kann dann so betrieben werden, dass nur Datenpakete von Verbindungen, deren jeweilige Resourcenreservierung auf diese Weise signalisiert wurde, gemäß der betreffenden Resourcenreservierung und Verkehrsklassenzugehörigkeit behandelt werden.

## Patentansprüche

1. Verfahren für ein paketorientiertes Kommunikationsnetz zum Aufbau einer Verbindung mit vorgegebener Dienstgüte von einem ersten Endgerät (EG1) über eine Netzübergangseinrichtung (R1, R2) und eine Übertragungsstrecke (US) zu einem zweiten Endgerät (EG2), bei dem
a) ein übertragungstechnischer Ressourcenumfang der Übertragungsstrecke (US) von einem Ressourcenmanager (RM) verwaltet wird,
b) durch die Netzübergangseinrichtung (R1, R2) im Rahmen eines Datentransfers aus über die Übertragungsstrecke (US) übertragenen oder zu übertragenden Datenpaketen (DP1, DP2) eine deren Ursprung und Ziel identifizierende Datenpaket-Adressinformation (A1, A2) sowie eine die Übertragungsstrecke (US) identifizierende Linkinformation (LUS) ausgelesen und zum Ressourcenmanager (RM) zur Aktualisierung von dessen Informationsbasis über die Verbindungsführung übermittelt wird,
c) zum Aufbau einer von vorhergehenden Datentransfers zwischen den Endgeräten (EG1, EG2) unabhängigen Verbindung zwischen den Endgeräten (EG1, EG2) mit vorgegebener Dienstgüte eine nachfolgende Ressourcenanforderung (RA) mit einer Ursprung und Ziel dieser Verbindung identifizierenden Verbindungsinformation zum Ressourcenmanager (RM) übermittelt wird,
d) durch den Ressourcenmanager (RM) anhand der Verbindungsinformation und der Datenpaket-Adressinformation (A1, A2) ermittelt wird, ob Ursprung und Ziel der aufzubauenden Verbindung mit Ursprung und Ziel der Datenpakete (DP1, DP2) von vorhergehenden Datentransfers zwischen den Endgeräten (EG1, EG2) übereinstimmen, und falls dies zutrifft
e) durch einen Gatekeeper (GK) oder einen SIP-Server der weitere Verbindungsaufbau abhängig vom verfügbaren Ressourcenumfang der durch die Linkinformation (LUS) identifizierten Übertragungsstrecke (US) erfolgt.

2. Verfahren nach Anspruch 1,
**dadurch gekennzeichnet,**
**dass** der Verbindungsaufbau nur dann fortgesetzt wird, falls die Resourcenanforderung (RA) den verfügbaren Resourcenumfang der Übertragungsstrecke (US) nicht übersteigt.

3. Verfahren nach einem der vorhergehenden Ansprüche,
**dadurch gekennzeichnet,**
**dass** durch die Netzübergangseinrichtung (R1, R2) eine Resourceninformation über den verfügbaren Resourcenumfang der Übertragungsstrecke (US) zum Resourcenmanager (RM) übermittelt wird.

4. Verfahren nach einem der vorhergehenden Ansprüche,
**dadurch gekennzeichnet,**
**dass** durch die Netzübergangseinrichtung (R1, R2) vor Übertragung der Datenpaket-Adressinformation (A1, A2) geprüft wird, ob eine inhaltsgleiche Datenpaket-Adressinformation bereits früher gesendet wurde, und nur falls dies nicht zutrifft die Übertragung durchgeführt wird.

5. Verfahren nach einem der vorhergehenden Ansprüche,
**dadurch gekennzeichnet,**
**dass** durch die Netzübergangseinrichtung (R1, R2) abhängig von der Datenpaket-Adressinformation (A1, A2) eine Routinginformation zum Erkennen von über die Übertragungsstrecke (US) verlaufenden Verbindungen, zum Resourcenmanager (RM) übermittelt wird.

6. Verfahren nach einem der vorhergehenden Ansprüche,
**dadurch gekennzeichnet,**
**dass** die Übertragung der Datenpaket-Adressinformation (A1, A2) eines Datenpaketes (DP1, DP2) zum Resourcenmanager (RM) abhängig von einer in diesem Datenpaket (DP1, DP2) enthaltenen Übermittlungsinformation erfolgt.

7. Verfahren nach einem der vorhergehenden Ansprüche,
**dadurch gekennzeichnet,**
**dass** der Resourcenumfang der Übertragungsstrecke (US) durch den Resourcenmanager (RM) dienst- und/oder prioritätsklassenspezifisch verwaltet wird.

8. Verfahren nach einem der vorhergehenden Ansprüche,
**dadurch gekennzeichnet,**
**dass** die Netzübergangseinrichtung (R1, R2) durch den Resourcenmanager (RM) im Sinne einer Sicherung der Dienstgüte der Verbindung gesteuert wird.

## Claims

1. A method for a packet-oriented communication network for establishment of a connection of pre-determined performance from a first end device (EG1) via a network transmission installation (R1, R2) and a transmission path (US) to a second end device (EG2), wherein
a) a scope of transmission system resources of the transmission path (US) is managed by a resource manager (RM),
b) the network transmission installation (R1, R2), in the context of a data transfer of data packets (DP1, DP2) transmitted or to be transmitted via the transmission path (US), reads data packet address information (A1, A2) identifying their origin and destination, as well as link information (LUS) identifying the transmission path (US), and transmits them to the resource manager (RM) for updating its basis of information on connection management,
c) for establishment of a connection of pre-determined performance between the end devices (EG1, EG2), independent of a prior data transfer between the end devices (EG1, EG2), a subsequent resource request (RA) with connection information identifying the origin and the destination of this connection is transmitted to the resource manager (RM),
d) the resource manager (RM) determines using the connection information and the data packet address information (A1, A2) whether the origin and the destination of the connection to be established correspond with the origin and the destination of the data packets (DP1, DP2) of prior data transfers between the end devices (EG1, EG2) and, if this is the case,
e) a gatekeeper (GK) or SIP server will perform further connection establishment depending on the available scope of resources of the transmission path (US) identified through link information (LUS).

2. The method according to claim 1,
**characterized in**
**that** the establishment of the connection will be continued only if the resource request (RA) does not exceed the available scope of resources of the transmission path (US).

3. The method according to one of the preceding claims, **characterized in**
**that** the network transmission installation (R1, R2) transmits resource information on the available scope of resources of the transmission path (US) to the resource manager (RM).

4. The method according to one of the preceding claims, **characterized in**
**that**, before transmission of the data packet address information (A1, A2), the network transmission installation (R1, R2) checks whether data packet address information identical in content has already been sent earlier, and that the transmission will be performed only if this is not the case.

5. The method according to one of the preceding claims, **characterized in**
**that**, depending on the data packet address information (A1, A2), the network transmission installation (R1, R2) transmits routing information to the resource manager (RM) for the identification of connections proceeding via the transmission path (US).

6. The method according to one of the preceding claims, **characterized in**
**that** the transmission of the data packet address information (A1, A2) of a data packet (DP1, DP2) to the resource manager (RM) is performed depending on the transmission information included in this data packet (DP1, DP2).

7. The method according to one of the preceding claims, **characterized in**
**that** the scope of resources of the transmission path (US) is managed by the resource manager (RM) in a class of service- or priority class-specific manner.

8. The method according to one of the preceding claims, **characterized in**
**that** the network transmission installation (R1, R2) is controlled by the resource manager (RM) for the purpose of safeguarding the performance of the connection.

## Revendications

1. Procédé pour un réseau de communication orienté paquet pour établir une liaison avec des qualités de service prédéfinies d'un premier terminal (EG1) via un dispositif de jonction de réseau (R1, R2) et une voie de transfert (US) vers un second terminal (EG2), dans lequel
a) un ensemble de ressources techniques de transmission de la voie de transfert (US) est administré par un gestionnaire de ressources (RM),
b) une information d'adresse de paquet de données identifiant son origine et son but (A1, A2), ainsi qu'une information de lien (LUS) identifiant la voie de transfert (US) est lue et transmise au gestionnaire de ressources (RM) pour actualisation de sa base d'informations via le guidage de la liaison, par un dispositif de jonction de réseau (R1, R2) dans le cadre d'un transfert de données de paquets de données (DP1, DP2) transmis ou à transmettre via la voie de transfert (US),
c) pour l'établissement d'une liaison entre les terminaux (EG1, EG2), indépendante du transfert de données entre les terminaux (EG1, EG2), avec des qualités de service prédéfinies, une demande en ressources (RA) avec une origine et but de cette information de liaison identifiant la liaison est transmise au gestionnaire de ressources (RM),
d) par l'intermédiaire du gestionnaire de ressource (RM), à l'aide de l'information de liaison et de l'information d'adresse de paquet de données (A1, A2), il est déterminé si l'origine et le but de la liaison à établir correspondent avec l'origine et le but des paquets de données (DP1, DP2) des transferts de données précédents entre les terminaux (EG1, EG2), et si cela est le cas
e) la suite de l'établissement de la liaison s'établit par un portier (gatekeeper - GK) ou un serveur SIP, en fonction de l'ensemble des ressources disponibles de la voie de transmission (US) identifiant l'information de lien (LUS).

2. Procédé selon la revendication 1, **caractérisé en ce que** l'établissement de la liaison ne peut être poursuivi que si la demande en ressources (RA) ne dépasse pas l'ensemble de ressources disponibles de la voie de transfert (US).

3. Procédé selon l'une quelconque des revendications précédentes, **caractérisé en ce que**, par l'intermédiaire du dispositif de jonction de réseau (R1, R2), une information de ressource sur l'ensemble de ressources disponibles de la voie de transfert (US) est transmise au gestionnaire de ressources (RM).

4. Procédé selon l'une quelconque des revendications précédentes, **caractérisé en ce que**, par l'intermédiaire du dispositif de jonction de réseau (R1, R2), l'on vérifie, avant le transfert de l'information d'adresse de paquet de données (A1, A2), si une information d'adresse de paquet de données au contenu identique a déjà été envoyée auparavant, et le transfert est effectué uniquement à cette condition.

5. Procédé selon l'une quelconque des revendications précédentes, **caractérisé en ce que**, par l'intermédiaire du dispositif de jonction de réseau (R1, R2), en fonction de l'information d'adresse de paquet de données (A1, A2), l'on transmet une information de routage pour la détection de liaisons se déroulant sur la voie de transfert (US) au gestionnaire de ressources (RM).

6. Procédé selon l'une quelconque des revendications précédentes, **caractérisé en ce que** le transfert de l'information d'adresse de paquet de données (A1, A2) d'un paquet de données (DP1, DP2) au gestionnaire de ressources (RM) s'effectue en fonction d'une information de transmission contenue dans ce paquet de données (DP1, DP2) .

7. Procédé selon l'une quelconque des revendications précédentes, **caractérisé en ce que** l'ensemble des ressources de la voie de transfert (US) est administré spécifiquement en matière de qualité et/ou de classe de priorité par le gestionnaire de ressources (RM).

8. Procédé selon l'une quelconque des revendications précédentes, **caractérisé en ce que** le dispositif de jonction de réseau (R1, R2) est piloté par le gestionnaire de ressources (RM) dans le sens d'une garantie de la qualité des services de la liaison.
